# EUROPEAN PATENT SPECIFICATION

(11) **EP 2 394 415 B1**
(45) Date of publication and mention of the grant of the patent: **23.04.2014**
(21) Application number: 09788481.1
(22) Date of filing: 06.02.2009
(51) Int. Cl.: H04L 29/08

(54) **A METHOD AND SERVER FOR ACCESSING AND PROVIDING PRESENCE INFORMATION IN A COMMUNICATIONS NETWORK**
VERFAHREN UND SERVER FÜR DAS ZURÜCKGREIFEN UND DIE LIEFERUNG VON ANWESENHEITSINFORMATIONEN IN EINEM KOMMUNIKATIONSNETZ
MÉTHODE ET SERVEUR POUR ACCÉDER ET FOURNIR DES INFORMATIONS DE PRÉSENCE DANS UN RÉSEAU DE TRANSMISSIONS

(43) Date of publication of application: 14.12.2011
(73) Proprietor: Telefonaktiebolaget L M Ericsson (PUBL), 164 83 Stockholm (SE)
(72) Inventor: LINDGREN, Anders, S-125 74 Älvsjö (SE); BOBERG, Christer, S-137 55 Tungelsta (SE); KLEIN, Mikael, S-141 63 Huddinge (SE); LASSBORN, Sofie, 191 43 Sollentuna (SE)
(74) Representative: Strandin, Heléne
(86) International application number: PCT/SE2009/050126
(87) International publication number: WO 2010/090563

(56) References cited:
- EP-A1- 1 873 976
- EP-A1- 1 968 263
- US-A1- 2007 088 670

## Description

### TECHNICAL FIELD

The present invention relates to a method that enables a Watcher to access presence information from a Presence Server via an XDM Client. The present invention also relates to a Presence Server and a Watcher Client configured to execute the suggested method.

### BACKGROUND

Today presence service is a well known network service, which may be applied in computer and telecommunication networks that conveys ability and/or willingness of a potential communication partner to communicate, and/or the reachability of the user. A user's client, typically referred to as a Presentity, provides presence information via a network connection to a presence service, which is stored in what constitutes his personal availability record and can be made available for distribution to other users, which in this context normally are referred to as Watchers, to convey the Presentity's availability for communication. Presence information has wide application in many communication services and is one of the innovations driving the popularity of services, such as instant messaging and recent implementations of voice over IP clients. EP 1873976 discloses a method for obtaining presence information from a presence server.

The IP Multimedia Subsystem (IMS) is a network system that is based on the Session Initiation Protocol (SIP), which is suitable to be used as a platform for a broad range of advanced Internet-based multimedia services and applications, such as e.g. the presence information service, on top of a packet switched network,

When applying a presence service, a Watcher may either request for the current presence information by executing a so called one time fetch, or subscribe for presence information associated with a specific Presentity, wherein the Watcher will be continuously notified of future updated presence information associated with the Presentity for the duration of the subscription, or until the Watcher terminates the subscribed presence service.

Throughout this document, both the Watcher and the Presentity will be defined as comprising, either a user, or an automated function operating on behalf of the user, and a UE, or, if used in an IMS network, an IMS terminal, comprising a client that is configured to manage the presence service, such that requested and authorized presence information can be provided to the respective user. The UE/IMS terminal may be any of e.g. a stationary PC, a laptop, a PDA, or a cellular telephone.

Presence service will now be described in more detail, when applied in an IMS system architecture. As already mentioned above, presence service is applicable in various types of communication networks, and the implementation of such a service in an IMS network should be seen only as one possible example among others.

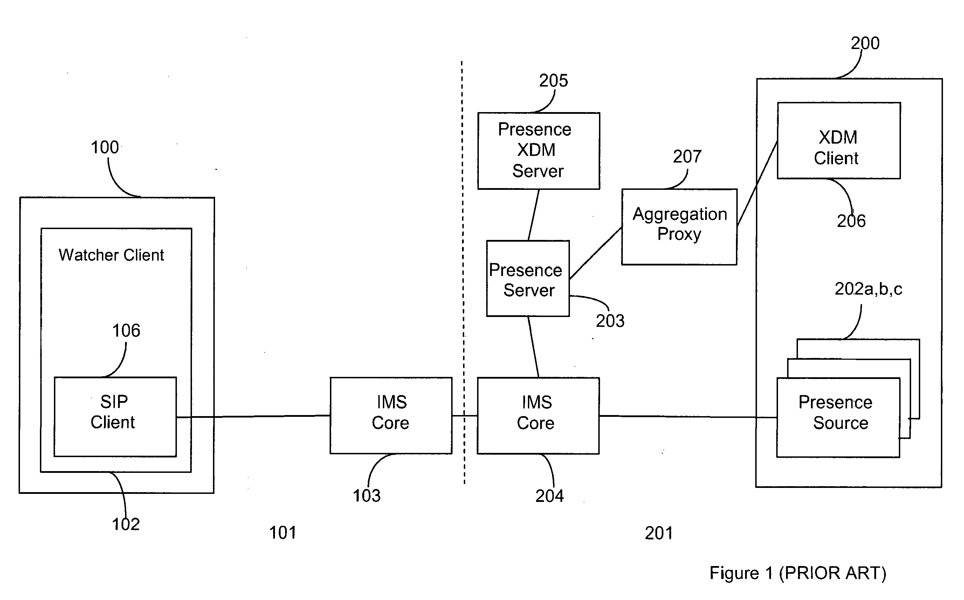

Figure 1 is a block scheme, illustrating a schematic IMS system architecture, according to the prior art, comprising a Watcher **100** that is configured to access a first IMS network **101,** and a Presentity **200,** that have access to another IMS network **201.**

It is to be understood that although the given example refers to a scenario where the Watcher and the Presentity accesses different IMS networks when using the IMS presence service, where different functionalities are described in association with the respective IMS network, a typical IMS network will comprise functionality for providing both Presentity, as well as Watcher functionality to users accessing the respective network. Obviously, the two IMS networks could be replaced by one single network, comprising both the functionality described in IMS network 101, as well as in IMS network 201, if both the Watcher 100 and the Presentity 200 are able to access the same network.

Presence information may be provided via one or more entities, typically referred to as presence sources 202a,b,c, in figure 1. Each of these presence sources may be located in, or in association, with a UE associated with the Presentity, or may be configured as a separate entity which has access to IMS network 201. A presence source, such as any of the ones of figure 1, forming part of the Presentity 200, may be configured to retrieve presence information on behalf of Presentity 200 from an external source (not shown), such as e.g. a location server, a calendar server or a Mobile Switching Centre (MSC).

Presence information associated with Presentity 200 and collected by a presence source is forwarded to a presence server **203** of IMS network **201,** where it is stored, and from where it can later be retrieved by a Watcher, such as e.g. Watcher 100.

Although a typical IMS network comprises a plurality of different network entities, or nodes,- for simplicity reasons each of IMS core networks 101,201, of figure 1 comprise a respective access point, represented by IMS Core **103** and **204,** respectively, through which Watchers and presentities will be able to access IMS presence information.

A Presentity, such as Presentity 200 may choose to specify certain Watchers that are to have access to the at least some presence information associated with Presentity 200, as well as what specific information a respective Watcher should have access to, by specifying presence rules, typically referred to as Presence Authorization Policies. The presence rules are stored in a Presence Markup Language (XML) Document Management Server (XDMS) **205,** which is typically an extensible Markup Language (XML) Configuration Access Protocol (XCAP) server that is configured to support management of XML documents.

A Presentity 200 may access the presence server 203 and the presence XDMS 205 in order to manipulate presence related data, such as e.g. presence authorization rules via an XDM client (XDMC) **206** and an aggregation proxy **207,** located in IMS network 201. It is also possible to use the XDMC 206 for the purpose of publishing persistent presence data, using XCAP.

A Watcher, requiring presence information associated with a specific Presentity may request for such information by activating a Watcher client, **102,** which, if configured to access one or more presence servers 203 via IMS core 103 of IMS network 101 and IMS core 204 of IMS network 201, comprises a SIP client **106.** The SIP client 106 comprises communication functionality that is configured to interpret the SIP protocol, such that SIP based presence information can be accessed by the Watcher client.

Once a request for presence information generated and transmitted by Watcher client 102 has been received by presence server 203, presence XDMS 205 is interrogated, and if relevant rules approves with the request, relevant parts of stored presence information will be distributed to Watcher 100 by presence server 203.

It is to be understood that the described network architecture is a simplified overview, and that interconnected networks typically comprise corresponding nodes and functionality, such that SIP clients in both networks may act both as Watchers, as well as presentities, thereby acting as a complete SIP based presence service client.

As indicated above, a Watcher wanting to do a one time fetch of presence information has to have a SIP client functionality that is configured to register with the network, and that is configured to use the SIP Subscribe/Notify method for retrieving presence information from a presence enabled communication system.

### SUMMARY

It is an object of the present invention to address the deficiencies mentioned above. More specifically, it is an object of the present invention to make it possible to use a UE that do not comprise a SIP client, but which is provided with an XDM client, not only as a Presentity, but also as a Watcher, i.e. to enable an XDM client to act as a complete presence service client.

This object, as well as other related ones, can be obtained by providing a method and arrangements, according to the independent claims attached below.
According to one aspect, a method in a Watcher Client of obtaining presence information from a Presence Server is provided.

According to this method, a request for presence information, comprising an XCAP user identity, is first generated by the Watcher client, and transmitted to the presence server, via an XDM Client of the Watcher Client.

Once the request has been successfully processed by the presence server, the Watcher Client receives a document in the form of a defined XCAP application usage from the presence server.

Thanks to the processing of the requested presence information at the presence server, the XDM Client will be able to recognise the returned presence information, as would it be received via a SIP client.
According to another aspect, a method of providing presence information associated with a Presentity to a Watcher Client is also provided in a presence server.

According to this embodiment, the presence server identifies a Watcher on the basis of an XCAP user identity, of a request, received from an XDM Client of the Watcher Client. Once the Watcher has been identified, the presence server generates a document on the basis of presence information stored at the presence server. The document is generated in the form of a defined XCAP application usage and, is provided with content, according to the Watcher identity. The generated document is then forwarded to the Watcher, where the document can be treated as conventional presence information.

The claimed invention also refers to a presence server and to an arrangement comprising a Watcher Client, both of which have been configured to execute the method suggested above.

By making presence information available also to Watcher Clients that do not have a SIP Client, but an XDM Client, the use of presence services will be spread to a wider range of user equipments, and, thus, the simplification of being able to access presence information will offer increased business opportunities and improved opportunities for implementing presence as a value added service in a wider range of business areas and products.

Further features of the present invention and its benefits will be explained in more detail in the detailed description below.

### BRIEF DESCRIPTION OF THE DRAWINGS

The present invention will now be described in more detail by means of exemplary embodiments and with reference to the accompanying drawings, in which:
- Fig. 1 is an overview, illustrating a network architecture that is configured to provide presence information to Watchers and Presentities according to the prior art.
- Fig. 2 is an overview, illustrating another network architecture that is configured to provide presence information to Watchers and Presentities according to one exemplary embodiment.
- Fig. 3 is a flow chart illustrating a method for enabling a Watcher to access presence information via an XDM Client, according to one exemplary embodiment.
- Fig. 4 is an illustration of a Presence Server configured to provide presence information to a Watcher Client comprising an XDM Client.
- Fig. 5 is an illustration of a Watcher Client configured to obtain presence information from a presence server via an XDM Client.

### DETAILED DESCRIPTION

XCAP is a protocol that enables a client to read, write, and modify application configuration data that is stored in the XML format on a server. Limited parts of such application configuration data can be referred to as an "application usage", which can be associated with a unique name, typically referred to as an Application Unique Identifier (AUID).

As already mentioned above, a typical IMS based presence service involves XDMC's and XDMS's that are entitled to use the XCAP protocol to manipulate Presentity related data, such as e.g. Presence Authorization Rules. In addition, it is also possible to use an XDMC to publish persistent presence data, using XCAP.

The present invention addresses the situation where a Watcher client does not have any SIP client functionality. In such a situation it would be beneficial if the presence information of a Presentity could be modelled as an XCAP application usage, thereby enabling the Watcher to be able to access the information by using XCAP instead of SIP.

In order to be able to provide such a solution, a method has been suggested where the Watcher client recognises the presence server also as an XDMS. By providing such a mechanism at the Watcher client, the Watcher will be able to retrieve presence information from a presence server by using an XCAP/XDM protocol, and to provide a document to the Watcher that is in the form of a defined XCAP application usage.

The aim of such a modelling mechanism is therefore to define presence data that is stored in a presence server also as an XCAP application usage, and to enable a Watcher client to fetch portions of such presence data, that the respective Presentity has allowed the Watcher to access, by using the XCAP protocol instead of the SIP protocol.

As indicated above, with reference to figure 1, a UE that can act as a Presentity, typically comprises XDMC functionality. If implementation of such a client functionality would be enough for enabling the user of UE to act both as a Presentity and a Watcher, the required UE configuration would be considerably simplified, since no SIP client would be compulsory for the UE.

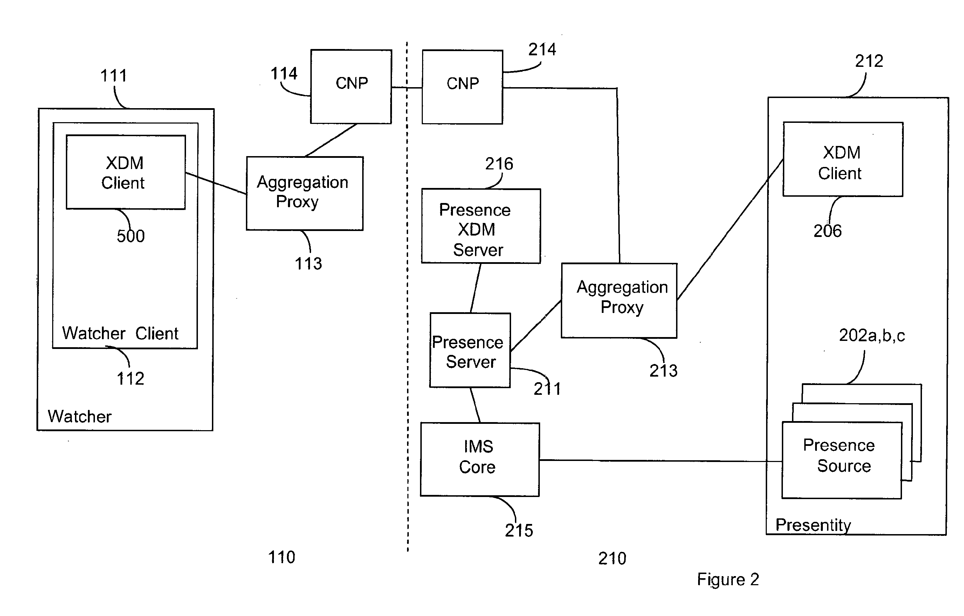

Looking again at an IMS network, figure 2 is a simplified overview of an IMS network architecture, made up by two interconnected IMS networks **110** and **210,** that may serve as an illustrative example for how the described presence information mechanism may be implemented and used. It is, however, to be understood that, in addition to IMS networks, the described method is applicable also for other types of communication networks.

According to figure 2, a Watcher **111;** comprising a Watcher client **112** may access a presence server 211 of IMS network 210, serving Presentity **212,** via an aggregation proxy **113** and a Cross Network Proxy (CNP) **114** of IMS network 110, and corresponding nodes **213, 214,** respectively, of IMS network 210, where each CNP is operating in accordance with a respective predefined Service Level Agreement (SLA) (not shown), in a conventional manner.

In accordance with the network architecture described above with reference to figure 1, it is to be understood that also the network architecture described with reference to figure 2, may be defined as one single network if Watcher 111 and Presentity 212 are able to register with the same network, e.g. such that also Watcher 111 may access presences server 211 via aggregation proxy 213.

Presence information requested by Watcher 111 using XCAP application usage will typically be delivered to Watcher 111 as a conventional Presence Information Data Format (PIDF) document. In order to be able to use the XCAP protocol for retrieving presence information associated with a specific Presentity 212, Watcher client 112 is provided with an XDMC **500.** When an XCAP based request has been processed by presence server 211 the response from presence server 211 will contain presence data associated with Presentity 212 that the Watcher is allowed to see.

In order for presence server 211 to be able to process an XCAP based request for presence server, it has to be able to identify the Watcher, as well as the Presentity. The identity of the Presentity is typically given by the value of the XCAP User Identifier (XUI) part of the XCAP document selector that the Watcher 111 uses to fetch the XML document defined by the relevant application usage.

Either a SIP address of a record associated with respective Presentity, or a corresponding tel. URI may be used as an XCAP User Identifier (XUI). The same content type and XML format as is presently used in the known SIP NOTIFY case may preferably be used also for the new XCAP application usage, and, thus, the document that is returned to the Watcher client in response to an XCAP GET will be generated from the presence information stored in the presence server, by using the same presence processing rule/s, that would have been used if the Watcher 111 had instead requested presence information using the conventional SIP NOTIFY method. A difference between the two different scenarios is, however, that the identity of the Watcher will be taken from different headers.

In the suggested XCAP based modelling mechanism the identity of the Watcher may be taken e.g. from an authenticated X-3GPP-Intended-Identity header, or any other equivalent XCAP header from which the Watcher can be identified, such as e.g. the X-3GPP-Asserted-Identity header, or the X-XCAP-Asserted-Identity header.

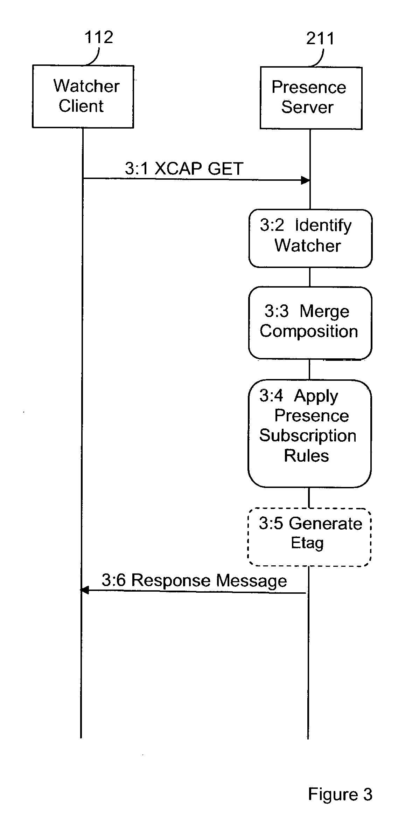

The general mechanism used in the exemplification described above for enabling a Watcher client that lacks a SIP Client to act as a Watcher towards a presence enabled network will now be described in further detail with reference to the flow chart of figure 3.

More specifically figure 3 illustrates how a Watcher client **112** comprising an XDMC (not shown) may be able to execute a so called one time fetch from presence server **211,** or from any other corresponding source. For simplicity reasons only the end nodes are included in figure 3, while other network nodes, such as e.g. Aggregation Proxies and CNPs, that may be necessary for providing a complete communication service to the Watcher clients have been omitted in the figure.

In a first **step 3:1** of figure 3, a one time fetch for presence information of a specific Presentity is initiated by Watcher client 112, typically by forwarding an XCAP GET request to presence server 211. The XCAP GET request identifies the respective Presentity and comprises an indication of the requested presence information, as well as the identity of the Watcher associated with Watcher client 112, as indicated with a next **step 3:2.** Typically, the identity of the Presentity is inserted as the XUI in the XCAP document selector of the XCAP GET, while the AUID value in the XCAP document selector defines that it is presence information that is requested.

As suggested above, the Watcher's identity may typically be inserted into the authenticated X-3GPP-Intended-Identity header, or into any other equivalent header, such as e.g. the X-CAP-Asserted-Identity header, X-3GPP-Asserted Identity header, or X-XCAP-Asserted identity header, instead of in the P-Asserted-Identity header, as would have typically been the case in a corresponding SIP related situation.

In a next **step 3:3,** presence server 211 executes a so called composition on the basis of the identity of the Watcher client 112. The Composition policy applied results in a merging of published presence information that have been previously obtained from one or more different presence sources (not shown) into one single document, according to conventional procedures. As commonly know, such presence information may comprise e.g. dynamic presence information, received from one or more presence sources (not shown) via different SIP PUBLISH, or persistent presence information, fetched from a Presence XDMS (not shown).

In addition, as indicated with another **step 3:4,** relevant Presence Subscription Rules, or other alternative rules, are applied with the requesting Watcher identity as input. This step may allow different types of rules to be applied as long as they allow relevant presence information to be merged by selectively choosing what presence information to provide access to for requesting Watcher client 112. It is to be understood that the same set of logic is used for the raw presence information processing in step 3:3 as would have been used if an initial SIP NOTIFY was instead to be processed in a corresponding SIP session.

This means that, out of the raw presence information stored at presence server 211, and as a result of step 3:3 and step 3:4, an XML document is created in the form of a defined application usage, according to the XCAP based request received in step 3:1.

Alternatively, presence server 211 may also generate an Etag value, which corresponds to the generated presence information, as indicated with an optional **step 3:5.** If Etags are applied, this is attached to the generated document.

Once a document has been generated, the document, with or without an Etag, is forwarded to Watcher client 112 in a response message, typically in the form of a PIDF document, forwarded as a 200 OK message, as indicated with the final **step 3:6.**

If Etags are applied, the generated Etag is also provided into the response message. Once received by Watcher client 112, the Etag value may be used for executing a subsequent conditional XCAP GET, such that in a later request the Watcher client 122 will receive a new document only if any information in the respective document has been changed since the latest XCAP GET generated and transmitted by Watcher client 112.

Since the XCAP PUT and XCAP DELETE methods will not be applicable for the described application usage, application server 211 may be configured to reply to such methods with an error response, such as e.g. with a "403 forbidden" message.

The Open Mobile Alliance (OMA) XDM specification also defines a search protocol to be used towards documents stored in a presence XDMS. As the presence server 211 may be configured to act also as an OMA XDMS, the presence XDMS may also be adapted to support search in a document. Such a function may be applicable for requesting only parts of presence information, instead of a whole document, or when only one or more specific value of a document is required by the Watcher.

A search may be executed for a specific element of a document, such as e.g. element <mood>, where the respective element, expressing the registered mood of the respective Presentity, is to be returned to a requesting Watcher client only if it exists in the relevant document or if it comprises a specific value, such as e.g. "happy".

In OMA XDM, search is based on XQUERY expressions that define which XML nodes in an XML document that shall be searched for and returned in a search response. The described search function can be comparable to the use of filtering in a corresponding SIP Subscribe case.

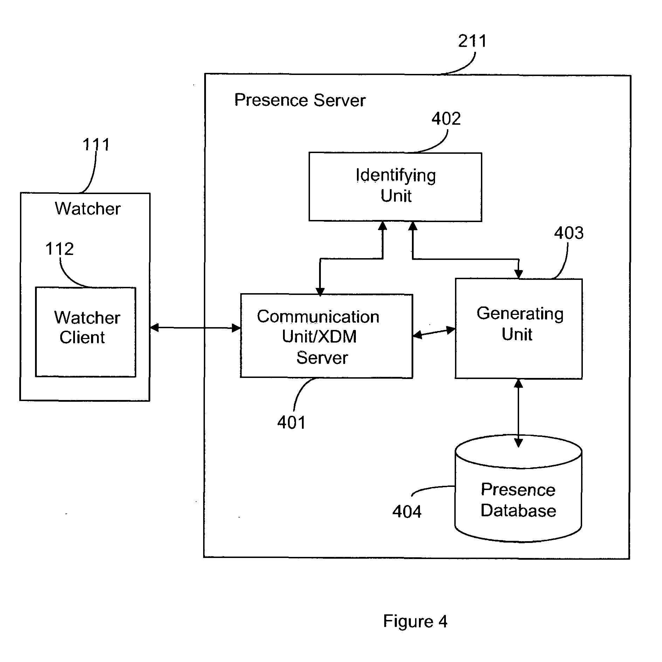

A presence server which applies the suggested method will have to be configured accordingly. A presence server that is configured to execute the method described above according to one exemplified embodiment will now be described in further detail with reference to figure 4.

In figure 4, a presence server **211** is communicating with a Watcher client **112,** via a communication unit **401,** that is configured to act as an XDMS from the Watcher clients point of view, i.e. to recognise XDM based requests and to transmit an XDM based response to such a request.

It is to be understood that figure 4 has been simplified, such that intermediate nodes that are normally located between the Watcher client 112 and the presence server 211 have been omitted for simplicity reasons. It is also to be understood, that, although not shown, presence server 211 comprises conventional functionality for communicating with a Presence XDMS, when acting as an XDMC, according to conventional procedures, such as the ones described above, with reference to figure 3.

As indicated above, the Presentity, as well as the Watcher associated with Watcher client 112 has to be identifiable. According to the present example, this may be achieved by a functional unit referred to as an identifying unit **402** that is configured to interrogate a certain, specified XCAP header of a XCAP based request for presence information that is received from a Watcher client.

Once the Watcher associated with Watcher client 112 has been identified, a document will be assembled that comprise the presence information that the Watcher is entitled to see. This may be achieved at another functional unit, here referred to as a generating unit **403** that has been configured to recognise the XCAP GET request and the identity of the respective Watcher from which the XCAP GET originated, when generating a relevant document from the raw presence information associated with a respective Presentity, and retrieved from a memory, typically a presence database **404.**

The generating unit 403 is configured to compose all existing presence information for the identified Presentity into one document and to apply relevant Presence Subscription Rules and/or any other Policies that may have been specified to be applicable for controlling what presence information a specific Watcher is allowed to access.

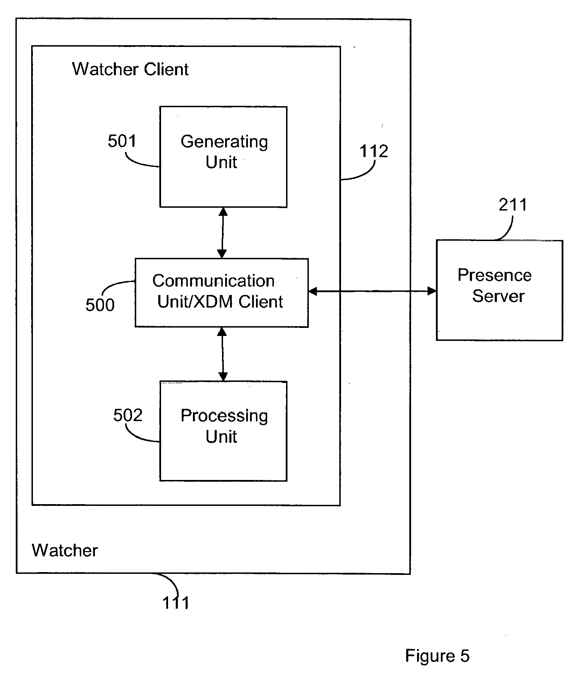

Also a Watcher client that is enabled to implement and use the suggested method has to be configured accordingly. Such a Watcher client, configured according to one exemplary embodiment, will be described in further detail below with reference to figure 5.

Watcher client **112** of figure 5, comprises a communication unit **500** that is configured to operate as an XDMC, i.e. to communicate with a presence server **211** via XDM protocols, such as e.g. the XCAP protocol, in order to request and obtain presence information.

Watcher client 112 also comprises a functional unit, here referred to as a generating unit 501, that is connected to communication unit/XDMC 500 and configured to generate an XDM request, in response to receiving an input from a user/Watcher, via a conventional user interface (not shown) or via some automated process (not shown), in a conventional manner.

Watcher client 112 of figure 5 also comprises another functional unit, here referred to as a processing unit **502** that is connected to communication unit/XDMC 500 and configured to process presence information received from presence server 211 in response to the XDM request.

Once processed the presence information may be used by the Watcher in a conventional manner, as if the presence information would have been retrieved via the SIP protocol.

By applying the suggested XDM based modelling mechanism, by introducing the XDM enabled Watcher client 112, presence information of a presence server will be made available, not only to Watchers being provided with a Watcher client having SIP client functionality, but also for Watchers having an XDMC, but no SIP client, and, thus, the presence service will be available to a larger range of UE's, and, consequently also to a larger number of users.

Since it is already today possible to publish presence information via XCAP, the suggested mechanism that allows Watchers provided with an XDMC to access presence information also via XCAP will enable the XDMC to act both as a Presentity/presence source and as a Watcher, and, thus, to become a full range presence service client.

Trough out this document, the terms used for expressing functional devices, entities or nodes, such as e.g. "communication unit", "processing unit", "identifying unit" and "generating unit", should be interpreted and understood in a broad sense to represent any type of devices, entities, nodes or units which have been configured to process and/or handle requests for presence information as well as the associated presence information.

In addition, while the invention has been described with reference to specific exemplary embodiments, the description is generally only intended to illustrate the inventive concept and should not be taken as limiting the scope of the invention, which is defined by the appended claims.

### ABBREVIATIONS

- AP: Aggregation Proxy
- AUID: Application Unique Identifier
- CNP: Computer Node Platform
- IMS: IP Multimedia Subsystem
- PS: Presence Server
- PIDF: Presence Information Data Format
- RLS: Resource Link Server
- SIP: Session Initiation Protocol
- SLA: Service Level Agreement
- XCAP: extensible Markup Language (XML) Configuration Access Protocol
- XDMS: XML Document Management Server
- XDM client: XML Document Management client
- XML: Extensive Mark-up Language

## Claims

1. A method in a Watcher Client (112) of obtaining presence information from a Presence Server (211), said method comprising the steps of:
- generating a request for presence information, said request comprising an XCAP user identity,
- transmitting (3:1) said request to the presence server (211) via an XDM Client (500) of the Watcher Client (112), and
- receiving (3:6) in response to said request a document in the form of a defined XCAP application usage from the presence server (211).

2. A method in a presence server (211) of providing presence information associated with a Presentity to a Watcher (111), comprising a Watcher Client (112), said method comprising the steps of:
- receiving (3:1) a request for presence information from an XDM Client of the Watcher Client (112),
- identifying (3:2) said Watcher (111) on the basis of an XCAP user identity of said request,
- generating (3:3,3:4,3:5) a document from presence information stored at said presence server (211), said document being generated in the form of a defined XCAP application usage and, provided with content according to said Watcher identity, and
- forwarding (3:6) said document to said Watcher (111) in a response to said request.

3. A method according to claim 1 or 2, wherein said request is an XCAP GET message.

4. A method according to claim 3, wherein said Watcher (111) is identified by way of interrogating an XCAP header of said XCAP GET message, wherein said XCAP header is any of: the authenticated X-3GPP-Intended-Identity header; the X-3GPP-Asserted-Identity header or the X-XCAP-Asserted-Identity header.

5. A method according to any of claims 2 - 4, further comprising the step of:
- generating (3:5) an Etag value, corresponding to the generated document, wherein said forwarding step 3:6) comprises forwarding said Etag value together with said generated document, thereby enabling said Watcher (111) to execute a subsequent conditional XCAP GET on the basis of said Etag.

6. A method according to any of claims 2 - 5, wherein said request is a search request and said step (3:5) of generating a document comprises selectively generating a document comprising one or more limited parts of said presence information, according to said search request.

7. A method according to claim 6, wherein said request is an OMA XDM search request.

8. A presence server (211) for providing presence information to a Watcher (111), comprising a Watcher client (112), said presence server comprising:
- a communication unit (401) configured to receive a request for presence information from an XDM client (500) of the Watcher Client (112),
- an identifying unit (402) configured to identify said Watcher (111) on the basis of an XCAP user identity of said request, and
- a generating unit (403) configured to generate a document from presence information stored at said presence server (211), in the form of a defined XCAP application usage, and provided with content according to said Watcher identity,
said communication unit (401) being further configured to forward said document to said Watcher (111) in response to said request.

9. A presence server (211) according to claim 8, wherein said communication unit (401) is configured to recognise a received XCAP GET message as a request for presence information associated with said predefined XCAP application usage.

10. A presence server (211) according to claim 9, wherein said identifying unit (402) is configured to identify said Watcher (111) by interrogating an XCAP header of said XCAP GET message, the XCAP header being any of:
the authenticated X-3GPP-Intended-Identity header;
the X-3GPP-Asserted-Identity header, or
the X-CAP-Asserted-Identity header.

11. A presence server (211) according to any of claims 8-10, wherein said generating unit (403) is further adapted to generate an Etag value, corresponding to the generated document, and wherein said communication unit (401) is further configured to forward said Etag value to the Watcher (111) together with said generated document, thereby enabling said Watcher to execute a subsequent conditional XCAP GET on the basis of said Etag.

12. A presence server (211) according to claim 11, wherein said communication unit (401) is configured to recognise a search request and in response to receiving such a request said generating unit (403) is further configured to generate a document that comprises one or more limited parts of said presence information, according to said search request, in response to said search request.

13. An arrangement (111) comprising a Watcher Client(112) for accessing presence information from a presence server (211), said Watcher Client (111) comprising:
- a generating unit (501) configured to generate an XCAP based request for presence information from said presence server (211),
- a communication unit (500) configured to transmit said request to said presence server (211), and
- a processing unit (502) configured to process presence information received by said communication unit (500) in response to said request.

14. An arrangement (111) according to claim 13, wherein said communication unit (500) is configured to act as an XDM client towards said presence server (211).

15. An arrangement (111) according to claim 13 or 14, wherein said arrangement is any of a mobile telephone, a PDA, a stationary PC or a laptop, acting as a Watcher.

## Patentansprüche

1. Verfahren in einem Watcher-Client (112) zum Erhalten von Anwesenheitsinformationen von einem Anwesenheitsserver (211), wobei das Verfahren folgende Schritte umfasst:
- Erzeugen einer Anforderung von Anwesenheitsinformationen, wobei die Anforderung eine XCAP-Benutzeridentität umfasst,
- Übertragen (3:1) der Anforderung an den Anwesenheitsserver (211) über einen XDM-Client (500) des Watcher-Clients (112), und
- als Reaktion auf die Anforderung Empfangen (3:6) eines Dokuments in Form einer definierten XCAP-Anwendungsnutzung von dem Anwesenheitsserver (211).

2. Verfahren in einem Anwesenheitsserver (211) zum Liefern von Anwesenheitsinformationen, die einem Informationslieferanten zugehörig sind, an einen Informationsabrufer (111), der einen Watcher-Client (112) umfasst, wobei das Verfahren folgende Schritte umfasst:
- Empfangen (3:1) einer Anforderung von Anwesenheitsinformationen von einem XDM-Client des Watcher-Clients (112),
- Erkennen (3:2) des Informationsabrufers (111) auf der Grundlage einer XCAP-Benutzeridentität der Anforderung,
- Erzeugen (3:3, 3:4, 3:5) eines Dokuments aus Anwesenheitsinformationen, die in dem Anwesenheitsserver (211) gespeichert sind, wobei das Dokument in Form einer definierten XCAP-Anwendungsnutzung erzeugt wird und mit Inhalt entsprechend der Informationsabruferidentität versehen wird, und
- Weiterleiten (3:6) des Dokuments an den Informationsabrufer (111) in einer Antwort auf die Anforderung.

3. Verfahren nach Anspruch 1 oder 2, wobei es sich bei der Anforderung um eine XCAP-GET-Nachricht handelt.

4. Verfahren nach Anspruch 3, wobei der Informationsabrufer (111) erkannt wird, indem ein XCAP-Header der XCAP-GET-Nachricht abgefragt wird, wobei es sich bei dem XCAP-Header um einen aus folgendem handelt: den authentifizierten X-3GPP-Intended-Identity-Header, den X-3GPP-Asserted-Identity-Header oder den X-XCAP-Asserted-Identity-Header.

5. Verfahren nach einem der Ansprüche 2 bis 4, ferner umfassend den folgenden Schritt:
- Erzeugen (3:5) eines Etag-Werts, der dem erzeugten Dokument entspricht, wobei der Weiterleitungsschritt (3:6) das Weiterleiten des Etag-Werts zusammen mit dem erzeugten Dokument umfasst, wodurch der Informationsabrufer (111) dazu in die Lage versetzt wird, eine anschließende bedingte XCAP-GET auf der Grundlage des Etag auszuführen.

6. Verfahren nach einem der Ansprüche 2 bis 5, wobei es sich bei der Anforderung um eine Suchanforderung handelt und der Schritt (3:5) des Erzeugens eines Dokuments das gezielte Erzeugen eines Dokuments entsprechend der Suchanforderung umfasst, das ein oder mehrere begrenzte Bestandteile der Anwesenheitsinformationen umfasst.

7. Verfahren nach Anspruch 6, wobei es sich bei der Anforderung um eine OMA-XDM-Suchanforderung handelt.

8. Anwesenheitsserver (211) zum Liefern von Anwesenheitsinformationen an einen Informationsabrufer (111), der einen Watcher-Client (112) umfasst, wobei der Anwesenheitsserver Folgendes umfasst:
- eine Datenübertragungseinheit (401), die so eingerichtet ist, dass sie eine Anforderung von Anwesenheitsinformationen von einem XDM-Client (500) des Watcher-Clients (112) empfängt,
- eine Erkennungseinheit (402), die so eingerichtet ist, dass sie den Informationsabrufer (111) auf der Grundlage einer XCAP-Benutzeridentität der Anforderung erkennt, und
- eine Erzeugungseinheit (403), die so eingerichtet ist, dass sie ein Dokument aus Anwesenheitsinformationen, die in dem Anwesenheitsserver (211) gespeichert sind, in Form einer definierten XCAP-Anwendungsnutzung erzeugt, das mit Inhalt entsprechend der Informationsabruferidentität versehen ist,
wobei die Datenübertragungseinheit (401) ferner so eingerichtet ist, dass sie das Dokument als Reaktion auf die Anforderung an den Informationsabrufer (111) weiterleitet.

9. Anwesenheitsserver (211) nach Anspruch 8, wobei die Datenübertragungseinheit (401) so eingerichtet ist, dass sie eine empfangene XCAP-GET-Nachricht als Anforderung von Anwesenheitsinformationen erkennt, die der vordefinierten XCAP-Anwendungsnutzung zugehörig sind.

10. Anwesenheitsserver (211) nach Anspruch 9, wobei die Erkennungseinheit (402) so eingerichtet ist, dass sie den Informationsabrufer (111) durch Abfragen eines XCAP-Headers der XCAP-GET-Nachricht erkennt, wobei es sich bei dem XCAP-Header um einen aus folgenden handelt: den authentifizierten X-3GPP-Intended-Identity-Header; den X-3GPP-Asserted-ldentity-Header oder den X-CAP-Asserted-Identity-Header.

11. Anwesenheitsserver (211) nach einem der Ansprüche 8 bis 10, wobei die Erzeugungseinheit (403) ferner so ausgelegt ist, dass sie einen Etag-Wert erzeugt, der dem erzeugten Dokument entspricht, und wobei die Datenübertragungseinheit (401) ferner so eingerichtet ist, dass sie den Etag-Wert zusammen mit dem erzeugten Dokument an den Informationsabrufer (111) weiterleitet, wodurch der Informationsabrufer dazu in die Lage versetzt wird, eine anschlieβende bedingte XCAP GET auf der Grundlage des Etag auszuführen.

12. Anwesenheitsserver (211) nach Anspruch 11, wobei die Datenübertragungseinheit (401) so eingerichtet ist, dass sie eine Suchanforderung erkennt und wobei die Erzeugungseinheit (403) als Reaktion auf den Empfang einer derartigen Anforderung ferner so eingerichtet ist, dass sie entsprechend der Suchanforderung als Reaktion auf die Suchanforderung ein Dokument erzeugt, das ein oder mehrere begrenzte Bestandteile der Anwesenheitsinformationen umfasst.

13. Anordnung (111), die einen Watcher-Client (112) umfasst, zum Zugreifen auf Anwesenheitsinformationen von einem Anwesenheitsserver (211), wobei der Watcher-Client (111) Folgendes umfasst:
- eine Erzeugungseinheit (501), die so eingerichtet ist, dass sie eine XCAP-basierte Anforderung von Anwesenheitsinformationen von dem Anwesenheitsserver (211) erzeugt,
- eine Datenübertragungseinheit (500), die so eingerichtet ist, dass sie die Anforderung an den Anwesenheitsserver (211) überträgt, und
- eine Verarbeitungseinheit (502), die so eingerichtet ist, dass sie Anwesenheitsinformationen verarbeitet, die von der Datenübertragungseinheit (500) als Reaktion auf die Anforderung empfangen werden.

14. Anordnung (111) nach Anspruch 13, wobei die Datenübertragungseinheit (500) so eingerichtet ist, dass sie als XDM-Client gegenüber dem Anwesenheitsserver (211) dient.

15. Anordnung (111) nach Anspruch 13 oder 14, wobei es sich bei der Anordnung um ein Mobiltelefon, einen PDA, einen stationären PC oder ein Laptop handelt, das bzw. der als Informationsabrufer dient.

## Revendications

1. Méthode dans un client observateur (112) pour obtenir des informations de présence d'un serveur de présence (211), ladite méthode comprenant les étapes consistant à :
- générer une requête d'informations de présence, ladite requête comprenant une identité d'utilisateur d'XCAP,
- transmettre (3:1) ladite requête au serveur de présence (211) par le biais d'un client XDM (500) du client observateur (112) et
- recevoir (3:6) du serveur de présence (211) un document sous forme d'une utilisation définie d'application XCAP en réponse à ladite requête.

2. Méthode dans un serveur de présence (211) pour fournir à un observateur (111), comprenant un client observateur (112), des informations de présence associées à une présentité ladite méthode comprenant les étapes consistant à :
- recevoir (3:1) une requête d'informations de présence d'un client XDM du client observateur (112),
- identifier (3:2) ledit observateur (111) sur la base d'une identité d'utilisateur d'XCAP de ladite requête,
- générer (3:3, 3:4, 3:5) un document à partir d'informations de présence stockées sur ledit serveur de présence (211), ledit document étant généré sous forme d'une utilisation définie d'application XCAP et doté de contenu en fonction de ladite identité de l'observateur et
- transférer (3:6) ledit document audit observateur (111) dans une réponse à ladite requête.

3. Méthode selon la revendication 1 ou 2, dans laquelle ladite requête est un message XCAP GET.

4. Méthode selon la revendication 3, dans laquelle ledit observateur (111) est identifié au moyen d'une interrogation d'un en-tête XCAP dudit message XCAP GET, dans laquelle ledit en-tête XCAP est l'un des en-tétes : l'en-tête X-3GPP-Intended-Identity authentifié ; l'en-tête X-3GPP-Asserted-Identity ou l'en-tête X-XCAP-Asserted-Identity.

5. Méthode selon l'une quelconque des revendications 2 à 4, comprenant en outre l'étape consistant à :
- générer (3:5) une valeur Etag, correspondant au document généré, dans laquelle ladite étape de transfert (3:6) comprend le transfert de ladite valeur Etag conjointement avec ledit document généré, permettant ainsi audit observateur (111) d'exécuter un XCAP GET conditionnel subséquent sur la base dudit Etag.

6. Méthode selon l'une quelconque des revendications 2 à 5, dans laquelle ladite requête est une requête de recherche et ladite étape (3:5) consistant à générer un document comprend générer de manière sélective un document comprenant une ou plusieurs parties limitées desdites informations de présence, en fonction de ladite requête de recherche.

7. Méthode selon la revendication 6, dans laquelle ladite requête est une requête de recherche OMA XDM.

8. Serveur de présence (211) pour fournir des informations de présence à un observateur (111), comprenant un client observateur (112), ledit serveur de présence comprenant :
- une unité de transmission (401) configurée pour recevoir une requête d'informations de présence d'un client XDM (500) du client observateur (112),
- une unité d'identification (402) configurée pour identifier ledit observateur (111) sur la base d'une identité d'utilisateur d'XCAP de ladite requête et
- une unité de génération (403) configurée pour générer un document à partir d'informations de présence stockées sur ledit serveur de présence (211), sous forme d'une utilisation définie d'application XCAP et doté de contenu en fonction de ladite identité de l'observateur,
ladite unité de transmission (401) étant en outre configurée pour transférer ledit document audit observateur (111) en réponse à ladite requête.

9. Serveur de présence (211) selon la revendication 8, dans lequel ladite unité de transmission (401) est configurée pour reconnaître un message XCAP GET reçu comme une requête d'informations de présence associées à ladite utilisation prédéfinie d'application XCAP.

10. Serveur de présence (211) selon la revendication 9, dans lequel ladite unité d'identification (402) est configurée pour identifier ledit observateur (111) en interrogeant un en-tête XCAP dudit message XCAP GET, ledit en-tête XCAP étant l'un des en-tétes : l'en-tête X-3GPP-Intended-Identity authentifié ; l'en-tête X-3GPP-Asserted-Identity ou l'en-tête X-CAP-Asserted-Identity.

11. Serveur de présence (211) selon l'une quelconque des revendications 8 à 10, dans lequel ladite unité de génération (403) est en outre adaptée pour générer une valeur Etag, correspondant au document généré, et dans lequel ladite unité de transmission (401) est en outre configurée pour transférer ladite valeur Etag à l'observateur (111) conjointement avec ledit document généré, permettant ainsi audit observateur d'exécuter un XCAP GET conditionnel subséquent sur la base dudit Etag.

12. Serveur de présence (211) selon la revendication 11, dans lequel ladite unité de transmission (401) est configurée pour reconnaître une requête de recherche et en réponse à la réception d'une telle requête ladite unité de génération (403) est en outre configurée pour générer un document qui comprend une ou plusieurs parties limitées desdites informations de présence, en fonction de ladite requête de recherche, en réponse à ladite requête de recherche.

13. Ensemble (111) comprenant un client observateur (112) pour accéder à des informations de présence d'un serveur de présence (211), ledit client observateur (111) comprenant :
- une unité de génération (501) configurée pour générer une requête d'informations de présence dudit serveur de présence (211) basée sur XCAP,
- une unité de transmission (500) configurée pour transmettre ladite requête audit serveur de présence (211) et
- une unité de traitement (502) configurée pour traiter des informations de présence reçues par ladite unité de transmission (500) en réponse à ladite requête.

14. Ensemble (111) selon la revendication 13, dans lequel ladite unité de transmission (500) est configurée pour agir comme client XDM envers ledit serveur de présence (211).

15. Ensemble (111) selon la revendication 13 ou 14, dans lequel ledit ensemble est l'un quelconque parmi un téléphone mobile, un PDA, un ordinateur personnel stationnaire ou un ordinateur portable, agissant comme observateur.
